# EUROPEAN PATENT SPECIFICATION

(11) **EP 3 823 421 B1**
(45) Date of publication and mention of the grant of the patent: **03.01.2024**
(21) Application number: 19209179.1
(22) Date of filing: 14.11.2019
(51) Int. Cl.: H05B 47/175

(54) **LED-DRIVER WITH PFC AND WIRED BUS INTERFACE**
LED-TREIBER MIT PFC UND VERDRAHTETER BUSSCHNITTSTELLE
PILOTE À DEL AVEC INTERFACE DE BUS PFC ET CÂBLÉE

(43) Date of publication of application: 19.05.2021
(73) Proprietor: Tridonic GmbH & Co KG, 6851 Dornbirn (AT)
(72) Inventor: Auer, Hans, 6850 Dornbirn (AT); Kucera, Clemens, 6850 Dornbirn (AT); Saccavini, Lukas, 6850 Dornbirn (AT); Stark, Stefan, 6850 Dornbirn (AT)
(74) Representative: Rupp, Christian

(56) References cited:
- TW-A- 201 244 533
- US-A1- 2004 140 777
- US-A1- 2014 001 962
- US-B2- 9 445 464

## Description

### TECHNICAL FIELD OF THE INVENTION

The invention relates to an LED-driver with reduced output voltage fluctuation. The invention further relates to a corresponding method and computer program.

### BACKGROUND OF THE INVENTION

In many operating devices for light-emitting means, it is conventional for the light-emitting means to be operated either at a high frequency, in particular in the case of gas discharge lamps, or else by means of pulse modulation, for example in the case of LEDs. For this purpose, so-called driver circuits are provided, which can be in the form of a pulse modulator, a full-bridge or half-bridge circuit, etc. Generally, a DC link voltage is supplied to these driver circuits, which DC link voltage may have a so-called ripple superimposed on it, if appropriate.

In order to provide this DC link voltage, often a so-called PFC (power factor correction) circuit, also referred to as active power factor correction circuit, is used. This PFC circuit generates the DC link voltage on the basis of a generally rectified mains supply voltage whilst maintaining a power factor which is as high as possible.

Furthermore, the so-called digital addressable lighting interface (DALI) provides two-way communications between lighting fixtures ("luminaires"), ballasts and controllers in buildings. It is defined in IEC technical standards IEC 62386 and IEC 60929, which cover LED drivers and electronic ballasts used in AC supplies with voltages up to 1000 V and with operating frequencies of 50 Hz or 60 Hz.

DALI uses Manchester-encoded 0 to 20 V signaling that enables a controller to address individual lights in a network or to broadcast commands to groups of lights in a zone.

Communication from the lights back to the controller is also possible, for reporting of parameters such as energy consumption and device failures.

DALI system cabling requirements are similar to conventional unidirectional 0 to 10 V controlled circuits deployed in commercial and industrial facilities. However, with DALI, the LED drivers and ballasts can be linked to a central computer, allowing each to be controlled independently.

LED drivers and ballasts can be connected to make up a group of LED drivers or ballasts. Each device is allocated an address, and the group is connected to a DALI controller. DALI does not require any hardwired power circuit control groups, but allows free-form network layout: daisy chain, star topology and multidrop are all permitted. A combination of two or more topologies is also allowed.

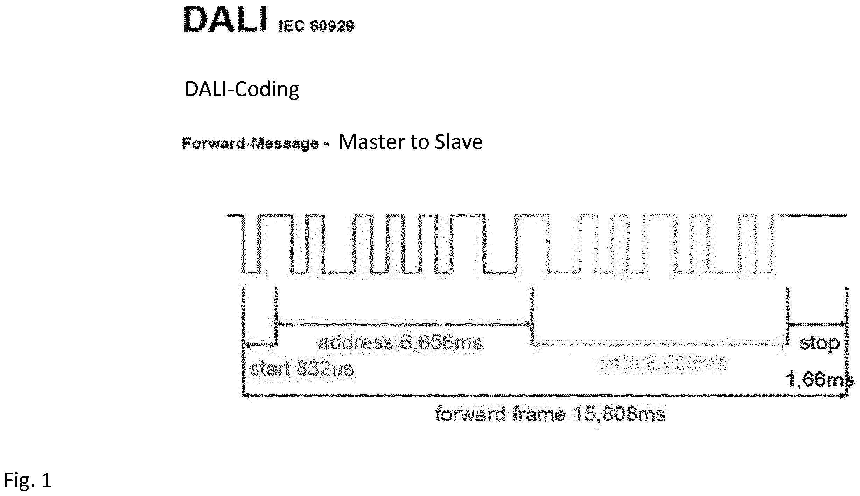

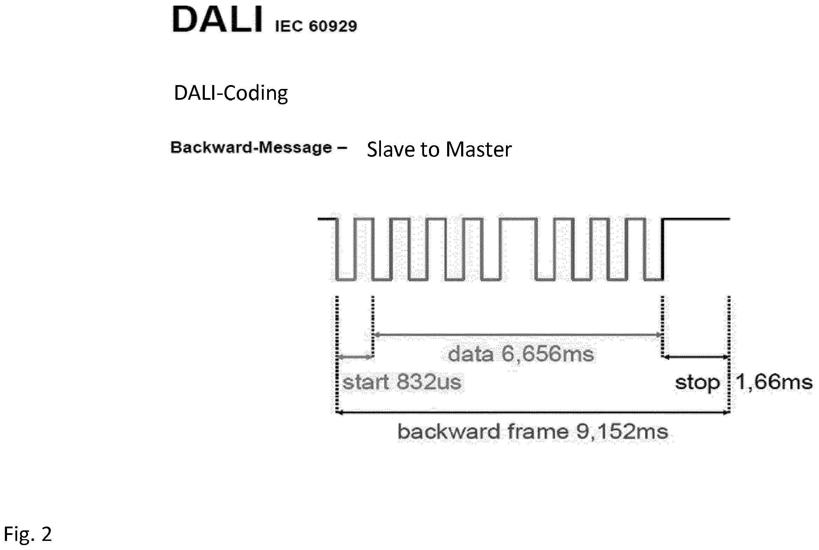

The diagrams in Fig. 1 and Fig. 2 show what typical DALI frames look like.

In particular, forward frames are packets sent by a controller to the lighting / ballast device. They consist of one start bit, eight address bits, eight data bits and two stop bits. The bits are sent most significant bits (MSB) first.

A backward frame is the response packet sent by the control gear back to the controller. It consists of one start bit, eight data bits and two stop bits.

The present disclosure is generally in the field of driver for lighting means, such as for example LEDs, which driver have an integrated DALI power supply. As known as such in the prior art, the DALI supply voltage can be tapped-off after the PFC circuitry, and thus prior to the supply of the DC bus voltage to a following converter stage, such as for example a LLC.

However, during DALI bus activities (falling and rising edges on the DALI bus), this tapping-off at the DC bus stage will lead to fluctuations and/or dips in the bus voltage, which can lead to the problem that these fluctuations are actually visible in the light output of the lighting means supplied by the following converter stage.

Currently, once the dim level is lower than a certain level, the PFC controller is switched to fast operation which reduces DALI frame disturbance on V_{bus}, but worsens the total harmonic distortion (THD) performance.

US 9 445 464 B2 discloses a method and a circuit arrangement for operating light-emitting means with a sudden load variation.

TW 201 244 533 A discloses a method and apparatus to limit current overshoot and undershoot in a light driver.

US 2014/001962 A1 relates to modular lighting control.

US 2004/140777 A1 discloses minimizing standby power in a digital addressable lighting interface.

Thus, it is an objective to provide an improved LED-driver with reduced fluctuations.

### SUMMARY OF THE INVENTION

The invention is defined by an LED-driver as defined in claim 1, and by a method for reducing output voltage fluctuations of an LED-driver as defined in claim 6. Advantageous implementations of the present invention are further defined in the dependent claims.

According to a first aspect, an LED-driver is provided. The LED-driver comprises an actively switched PFC circuitry and a bus interface for a wire-bound bus, wherein a voltage supply for the bus interface for powering the bus is tapped off the output voltage of the active PFC circuitry, further comprising a control circuitry for a feedback control of an output voltage of the actively switched PFC by controlling a switch of the PFC, wherein the time constant of the feedback control of the control circuitry is faster during time periods in which the bus interface is transmitting or receiving signals, compared to time periods without activity.

This provides the advantage that during DALI bus activities (falling and rising edges on the DALI bus), the fluctuations due to the tapping-off at the DC bus stage, which can be visible in the light output of the lighting means supplied by the following converter stage, are reduced.

The LED driver comprises a bus power supply unit, preferably supplied by the output voltage of the PFC circuitry, supplying DC power to the bus interface for supplying bus power.

In an embodiment, the control circuitry is an ASIC.

This provides the advantage that a well-known control circuitry can be used.

The LED-driver further comprises a microcontroller configured to control the bus interface and is further configured to communicate with the ASIC.

In a non-claimed embodiment, the control circuitry is further configured to detect fluctuations of the switch activity of the PFC circuitry and wherein the microcontroller is configured to make faster the time constant of the control circuitry if such fluctuations occur, or the ASIC on its own.

This provides the advantage that during DALI bus activities (falling and rising edges on the DALI bus), the fluctuations due to the tapping-off at the DC bus stage, which can be visible in the light output of the lighting means supplied by the following converter stage, are reduced.

In a non-claimed embodiment, the LED-driver comprises an electromagnetic interference (EMI) filter.

This provides the advantage that the disturbance which is generated by external sources that may affect the electrical circuit by electromagnetic induction, electrostatic coupling, or conduction and which may degrade the performance of the circuit or even stop it from functioning is significantly reduced.

In a non-claimed embodiment, the LED-driver comprises a half-bridge (HB)-LLC circuitry.

This provides the advantage that a high efficient circuitry is provided.

In an embodiment, the power factor correction (PFC) circuitry is a boost PFC circuitry.

This provides the advantage that the power factor correction shapes the input current of off-line power supplies to maximize the real power available from the mains.

In an embodiment, the LED-driver comprises two optocouplers arranged between the microcontroller and the bus interface, wherein the optocouplers are configured to provide optical isolation of the microcontroller from the bus interface.

In a non-claimed embodiment, the LED-driver comprises two transformers, wherein the transformers are configured to provide insulation to the LED-driver.

In a non-claimed embodiment, the LED-driver comprises a first side and a second side and the second side comprises a module configured to perform rectification and sensing on an output current of the LED-driver.

In a non-claimed embodiment, the voltage supply is 12 V.

The bus interface is a DALI interface.

This provides the advantage that a well-known interface is provided.

According to a second aspect, a method for reducing fluctuations on an LED-driver comprises tapping off an output voltage of an active PFC a voltage supply for a bus interface for powering a bus, and feedback controlling of an output voltage of the active PFC by controlling a switch of the PFC, wherein the time constant of the feedback controlling is faster during time periods in which the bus interface is transmitting or receiving signals over the bus compared to time periods without activity.

According to a third aspect, there is provided a computer program comprising a computer product for performing the method of the second aspect.

### BRIEF DESCRIPTION OF THE DRAWINGS

The invention will be explained in the following together with the figures.
- Fig. 1: shows an example of a DALI forward frame;
- Fig. 2: shows an example of a DALI backward frame;
- Fig. 3: shows a schematic representation of an LED-driver according to an embodiment;
- Fig. 4: shows a schematic representation of different voltages (V_{bus}, V_{dali} and V_{ctrl}) in a LED-driver as a function of time; and
- Fig. 5: shows a schematic representation of a method for reducing fluctuations on an LED-driver.

### DETAILED DESCRIPTION OF THE PREFERRED EMBODIMENTS

Aspects of the present invention are described herein in the context of an LED-driver.

The present invention is described more fully hereinafter with reference to the accompanying drawings, in which various aspects of the present invention are shown. This invention however may be embodied in many different forms and should not be construed as limited to the various aspects of the present invention presented through this disclosure. Rather, these aspects are provided so that this disclosure will be thorough and complete, and will fully convey the scope of the present invention to those skilled in the art. The various aspects of the present invention illustrated in the drawings may not be drawn to scale. Rather, the dimensions of the various features may be expanded or reduced for clarity. In addition, some of the drawings may be simplified for clarity. Thus, the drawings may not depict all of the components of a given apparatus.

Various aspects of a LED-driver will be presented. However, as those skilled in the art will readily appreciate, these aspects may be extended to aspects of LED-drivers without departing from the invention.

The term "LED luminaire" shall mean a luminaire with a light source comprising one or more LEDs. LEDs are well-known in the art, and therefore, will only briefly be discussed to provide a complete description of the invention.

It is further understood that the aspect of the present invention might contain integrated circuits that are readily manufacturable using conventional semiconductor technologies, such as complementary metal-oxide semiconductor technology, short "CMOS". In addition, the aspects of the present invention may be implemented with other manufacturing processes for making optical as well as electrical devices. Reference will now be made in detail to implementations of the exemplary aspects as illustrated in the accompanying drawings. The same references signs will be used throughout the drawings and the following detailed descriptions to refer to the same or like parts.

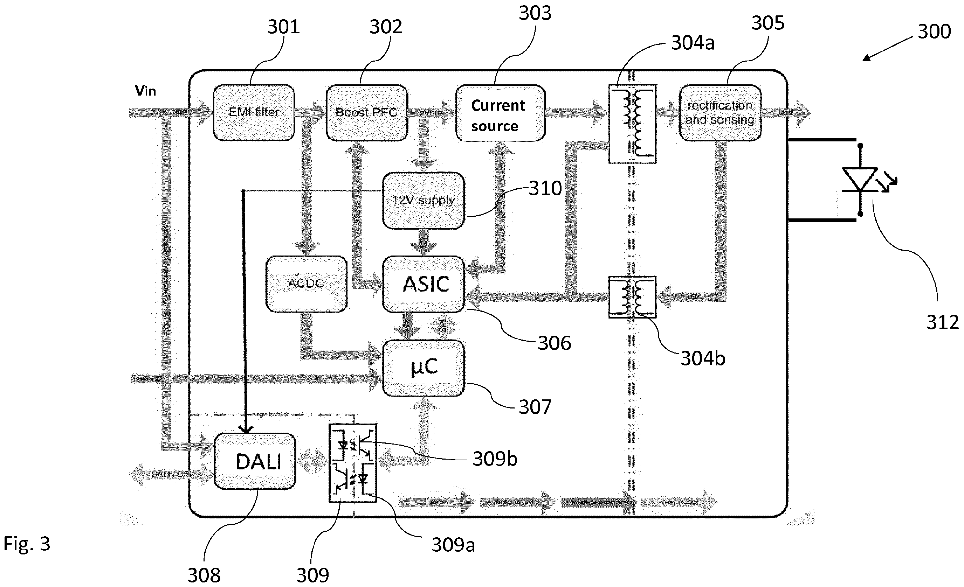

Now referring to Fig. 3, a schematic representation of a LED-driver 300 is shown. The LED-driver of the invention is defined in accordance with claim 1.

The LED-driver 300 comprises an actively switched PFC circuitry 302 and a bus interface 308 for a wire-bound bus.

Preferably a low voltage voltage supply 310 for the bus interface 308 for powering the bus is tapped off the output voltage of the actively switched PFC circuitry 302. The low voltage power supply draws higher electrical energy during time periods of activity on the bus.

The low voltage power supply 310 may furthermore supply integrated circuits, such as e.g. the ASIC and the pc.

The LED-driver 300 comprises further a control circuitry 306 for a feedback control of an output voltage of the actively switched PFC 302 by controlling a switch of the actively switched PFC 302, wherein the time constant of the feedback control of the control circuitry 306 is faster during time periods in which the bus interface 308 is transmitting or receiving signals, compared to time periods without activity.

Therefore, advantageously, in order to reduce the fluctuations of the DC bus voltage by feedback control, the PFC control time constant should be made fast. In order to avoid problems occurring with a constantly fast PFC feedback control, the control time constant of the PFC control circuitry is only made faster in time periods during which there is communication activity on the bus interface such as a DALI bus.

According to the invention, the LED driver comprises a microcontroller 307 responsible for the communication over the DALI interface 308, which selectively increases the control speed of the actively switched PFC 302 in time periods in which it either sends out DALI signals over the DALI interface 308, or upon the detection of incoming DALI signals from the bus.

In a non-claimed embodiment, the control circuitry 306 (typically an ASIC) carrying out the feedback control of a switch of the PFC circuitry 302 directly detects fluctuations which are typically caused by DALI bus activities and directly increases the feedback control time constant upon detection of such fluctuations.

Furthermore, the DALI interface circuit 308 is configured to transmit and receive signals between the DALI network and the microcontroller 307. Digital data conforming to the DALI protocol can be transmitted over lines through a bridge rectifier (not shown in Fig. 3).

The digital data received from the DALI network can be converted into digital signals and transmitted and received to and from the microcontroller 307. The microcontroller 307 can control the ASIC 306 by sending signals to perform actions such as, for example, to dim a lamp 312 or to turn on or off the ASIC 306. The microcontroller 307 can receive signals from the ASIC 306 such as, for example, lamp fault detection purposes. The ASIC 306 can determine whether the lamp 312 should be on or off based on fault conditions exhibited by the lamp 312.

The conventional DALI interface circuit can include a zener diode and a resistor coupled between the rectifier and an optocoupler on the receive side. The conventional DALI interface circuit also includes a bipolar junction transistor, and a resistor coupled to the rectifier and an optocoupler on the transmit side.

In a non-claimed embodiment, the LED-driver 300 comprises an electromagnetic interference (EMI) filter 301, a current source 303, a rectification and sensing unit 305, transformers 304a and 304b, and two optocouplers 309a and 309b in unit 309.

In particular, the LED-driver 300 includes two 4-pin optocouplers 309a and 309b in order to optically isolate the microcontroller 307 from the digital data received from the DALI network.

The isolation circuit 309 is coupled between the interface circuit 308 and the microcontroller 307, the isolation circuit 309 being structured to optically isolate the interface circuit 308 from the microcontroller 307. The isolation circuit 309 may protect other components of the LED-driver 300 (e.g., the microcontroller 307) from transient voltages or currents.

The isolation circuit 309 may include saturating optocouplers 309a and 309b. Saturating optocouplers used in the isolation circuit 309 may include an additional terminal coupled to the base of the BJT of the optocoupler, the terminal being coupled to a resistor to achieve substantially a 50% even duty cycle. Otherwise, an unwanted charge builds on the base of the BJT of the optocoupler, which substantially slows the switching speed of the optocoupler. The terminal coupled to the base of the BJT of the saturating optocoupler can be coupled to a resistor, which is coupled to the gate of a transmitting transistor. A capacitor can also be coupled to the base of the BJT of the saturating optocoupler. The terminal coupled to the base of the BJT of the saturating optocoupler 309a can be coupled to a resistor, which may be coupled to ground.

The digital signals received from the network over the terminals of the DALI interface 308 can be received via a bridge rectifier. The received digital signals can include at least one forward frame (see Fig. 1). Similarly, the digital signals transmitted to the network over the terminals of the DALI interface 308 can be sent via the bridge rectifier. The transmitted digital signals may include at least one backward frame (see Fig. 2).

A forward frame may be a sequence of bits used to transmit data from a master or transmitting node to a slave/remote or receiving node.

A backward frame may be a sequence of bits used to return data from the slave/remote or receiving node to the master or transmitting node.

Furthermore, the transformers 304a and 304b can be configured to provide single or double insulation to the LED-driver 300.

The actively switched PFC can be a boost PFC.

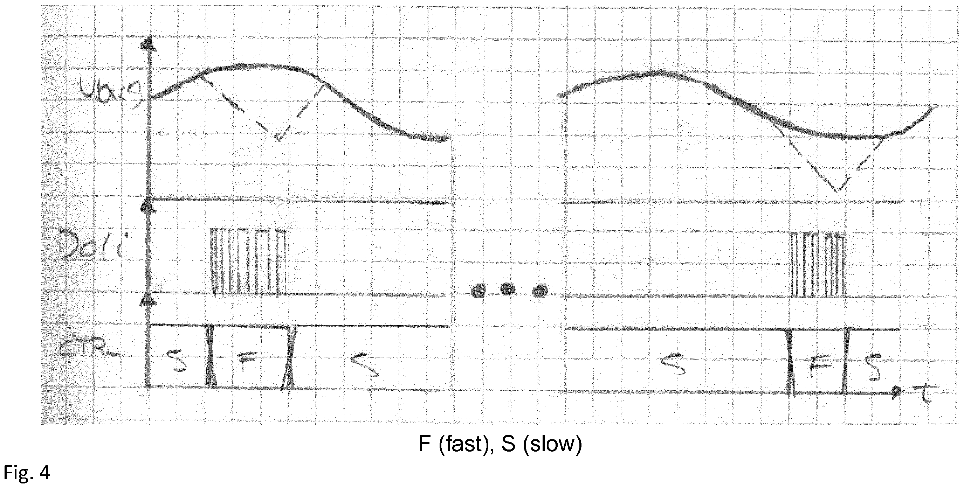

In Fig. 4, a schematic representation of the voltage of the bus V_{bus}, the interface V_{DALI} and the control circuitry 307 V_{ctrl} is given as a function of time.

As it can be taken from Fig. 4, when there is DALI activity, the PFC control time constant is made fast (F), while when there is no DALI activity, the PFC control time constant is made slow (S).

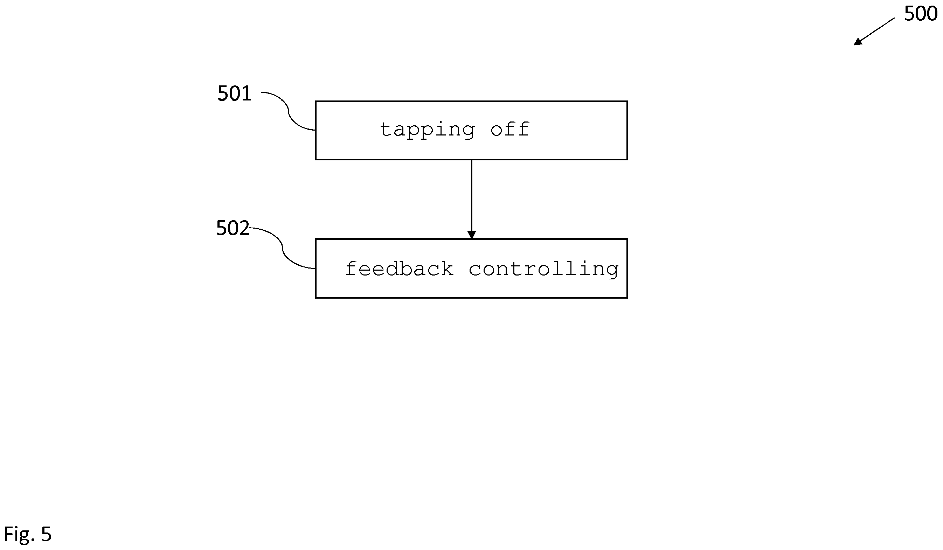

Fig. 5 shows a schematic representation of a method 500 for reducing fluctuations on an LED-driver 300 according to a non-claimed embodiment. The method of the invention is defined in accordance with claim 6.

According to Fig. 5, the method 500 for reducing fluctuations on the LED-driver 300 comprises the following steps:
- tapping off 501 an output voltage of an actively switched PFC 302 a voltage supply for a bus interface 308 for powering a bus; and
- feedback controlling 502 of an output voltage of the actively switched PFC 302 by controlling a switch of the PFC; wherein the time constant of the feedback controlling 502 is faster during time periods in which the bus interface 308 is transmitting or receiving signals over the bus compared to time periods without activity.

The invention is further defined by a computer program product in accordance with claim 7.

The scope of the invention should be defined in accordance with the following claims and their equivalence.

## Claims

1. An LED-driver (300), comprising:
- an actively switched PFC circuitry (302),
- a DALI bus interface (308) connectable to a DALI bus,
- a bus power supply unit (310) configured to supply power to the DALI bus interface (308) for powering the DALI bus by tapping a supply voltage for the DALI bus interface (308) off an output voltage of the actively switched PFC circuitry (302),
- a control circuitry (306) for feedback control of the output voltage of the actively switched PFC (302) by the control circuitry (306) being configured for controlling a switch of the actively switched PFC (302), and
- a microcontroller (307) configured to control the DALI bus interface (308) and to communicate with the control circuitry (306),
**characterized in that**
the microcontroller (307) is further configured to selectively increase a control speed of the actively switched PFC (302) in time periods in which the microcontroller (307) sends out DALI signals over the DALI bus interface (308) or detects incoming DALI signals from the DALI bus interface (308).

2. The LED-driver of claim 1, wherein the bus power supply unit (310) is further configured to be supplied by the output voltage of the PFC circuitry (302), and for supplying DC power to the DALI bus interface (308), the DALI bus interface (308) being arranged for supplying power to the DALI bus.

3. The LED-driver (300) of any one of the preceding claims, wherein the control circuitry (306) is an ASIC.

4. The LED-driver (300) of any one of the preceding claims, wherein the PFC circuitry (302) is a boost PFC circuitry.

5. The LED-driver (300) of any one of the preceding claims, wherein the LED-driver (300) comprises two optocouplers (309a, 309b) arranged between the microcontroller (307) and the DALI bus interface (308), wherein the optocouplers (309a, 309b) are configured to provide optical isolation of the microcontroller (307) from the DALI bus interface (308).

6. A method for reducing output voltage fluctuations of an LED-driver (300), comprising:
- supplying power, by a bus power supply unit (310), to a DALI bus interface (308) connectable to a DALI bus for powering the DALI bus by tapping a supply voltage for the DALI bus interface (308) off an output voltage of an actively switched PFC circuitry (302),
- controlling, by a control circuitry (306) for feedback control of the output voltage of the actively switched PFC (302), a switch of the actively switched PFC (302),
- controlling, by a microcontroller (307), the DALI bus interface (308) and
- communicating, by the microcontroller (307), with the control circuitry (306),
**characterized in that** the method further comprises
- selectively increasing, by the microcontroller (307), a control speed of the actively switched PFC (302) in time periods in which the microcontroller (307) sends out DALI signals over the DALI bus interface (308) or detects incoming DALI signals from the DALI bus interface (308).

7. A Computer program product storing at least one software code portion, the at least one software code portion comprising instructions to cause the LED-driver (300) of claim 1 to execute the steps of the method of claim 6.

## Patentansprüche

1. LED-Treiber (300), umfassend:
- eine aktiv geschaltete PFC-Schaltlogik (302),
- eine DALI-Busschnittstelle (308), die mit einem DALI-Bus verbindbar ist,
- ein Busnetzteil (310), das konfiguriert ist, um die DALI-Busschnittstelle (308) zum Leistungsversorgen des DALI-Busses durch Anzapfen einer Speisespannung für die DALI-Busschnittstelle (308) von einer Ausgangsspannung der aktiv geschalteten PFC-Schaltlogik (302) mit Leistung zu speisen,
- eine Steuerschaltlogik (306) für eine Rückkopplungssteuerung der Ausgangsspannung der aktiv geschalteten PFC (302) durch die Steuerschaltlogik (306), die zum Steuern eines Schalters der aktiv geschalteten PFC (302) konfiguriert ist, und
- eine Mikrosteuereinrichtung (307), die konfiguriert ist, um die DALI-Busschnittstelle (308) zu steuern und mit der Steuerschaltlogik (306) zu kommunizieren,
**dadurch gekennzeichnet, dass**
die Mikrosteuereinrichtung (307) ferner konfiguriert ist, um eine Steuergeschwindigkeit der aktiv geschalteten PFC (302) in Zeiträumen, in denen die Mikrosteuereinrichtung (307) DALI-Signale über die DALI-Busschnittstelle (308) aussendet oder eingehende DALI-Signale von der DALI-Busschnittstelle (308) erfasst, selektiv zu erhöhen.

2. LED-Treiber nach Anspruch 1, wobei das Busnetzteil (310) ferner konfiguriert ist, um durch die Ausgangsspannung der PFC-Schaltlogik (302) gespeist zu werden, und zum Speisen der DALI-Busschnittstelle(308) mit Gleichstromleistung, wobei die DALI-Busschnittstelle (308) zum Speisen des DALI-Busses mit Leistung angeordnet ist.

3. LED-Treiber (300) nach einem der vorstehenden Ansprüche, wobei die Steuerschaltlogik (306) eine ASIC ist.

4. LED-Treiber (300) nach einem der vorstehenden Ansprüche, wobei die PFC-Schaltlogik (302) eine Boost-PFC-Schaltlogik ist.

5. LED-Treiber (300) nach einem der vorstehenden Ansprüche, wobei der LED-Treiber (300) zwei Optokoppler (309a, 309b), die zwischen der Mikrosteuereinrichtung (307) und der DALI-Busschnittstelle (308) angeordnet sind, umfasst, wobei die Optokoppler (309a, 309b) konfiguriert sind, um eine optische Isolierung der Mikrosteuereinrichtung (307) von der DALI-Busschnittstelle (308) bereitzustellen.

6. Verfahren zum Verringern von Ausgangsspannungsfluktuationen eines LED-Treibers (300), umfassend:
- Speisen, durch ein Busnetzteil(310), einer DALI-Busschnittstelle (308), die mit einem DALI-Bus verbindbar ist, mit Leistung zum Leistungsversorgen des DALI-Busses durch Anzapfen einer Speisespannung für die DALI-Busschnittstelle (308) von einer Ausgangsspannung einer aktiv geschalteten PFC-Schaltlogik (302),
- Steuern, durch eine Steuerschaltlogik (306) für die Rückkopplungssteuerung der Ausgangsspannung der aktiv geschalteten PFC (302), eines Schalters der aktiv geschalteten PFC (302),
- Steuern, durch eine Mikrosteuereinrichtung (307), der DALI-Busschnittstelle (308) und
- Kommunizieren, durch die Mikrosteuereinrichtung (307), mit der Steuerschaltlogik (306),
**dadurch gekennzeichnet, dass** das Verfahren ferner umfasst
- selektives Erhöhen, durch die Mikrosteuereinrichtung (307), einer Steuergeschwindigkeit der aktiv geschalteten PFC (302) in Zeiträumen, in denen die Mikrosteuereinrichtung (307) DALI-Signale über die DALI-Busschnittstelle (308) aussendet oder eingehende DALI-Signale von der DALI-Busschnittstelle (308) erfasst.

7. Computerprogrammprodukt, das mindestens einen Softwarecodeabschnitt speichert, der mindestens eine Softwarecodeabschnitt umfassend Anweisungen, um den LED-Treiber (300) nach Anspruch 1 zu veranlassen, die Schritte des Verfahrens nach Anspruch 6 auszuführen.

## Revendications

1. Pilote de DEL (300), comprenant :
- une circuiterie PFC à commutation active (302),
- une interface de bus DALI (308) pouvant être connectée à un bus DALI,
- un bloc d'alimentation de bus (310) configuré pour alimenter en énergie l'interface de bus DALI (308) pour mettre sous tension le bus DALI en exploitant une tension d'alimentation pour l'interface de bus DALI (308) d'une tension de sortie de la circuiterie PFC à commutation active (302),
- une circuiterie de commande (306) pour une commande de rétroaction de la tension de sortie du PFC à commutation active (302) par la circuiterie de commande (306) étant configurée pour commander un commutateur du PFC à commutation active (302), et
- un micro-dispositif de commande (307) configuré pour commander l'interface de bus DALI (308) et pour communiquer avec la circuiterie de commande (306),
**caractérisé en ce que**
le micro-dispositif de commande (307) est en outre configuré pour augmenter sélectivement une vitesse de commande du PFC à commutation active (302) dans des périodes de temps dans lesquelles le micro-dispositif de commande (307) envoie des signaux DALI en sortie sur l'interface de bus DALI (308) ou détecte des signaux DALI entrants provenant de l'interface de bus DALI (308).

2. Pilote pour DEL selon la revendication 1, dans lequel le bloc d'alimentation de bus (310) est en outre configuré pour être alimenté par la tension de sortie du circuit PFC (302), et pour alimenter en puissance CC l'interface de bus DALI (308), l'interface de bus DALI (308) étant agencée pour alimenter en énergie le bus DALI.

3. Pilote pour DEL (300) selon l'une quelconque des revendications précédentes, dans lequel la circuiterie de commande (306) est un ASIC.

4. Pilote pour DEL (300) selon l'une quelconque des revendications précédentes, dans lequel la circuiterie PFC (302) est une circuiterie de stimulation PFC.

5. Pilote pour DEL (300) selon l'une quelconque des revendications précédentes, dans lequel le pilote pour DEL (300) comprend deux optocoupleurs (309a, 309b) agencés entre le micro-dispositif de commande (307) et l'interface de bus DALI (308), dans lequel les optocoupleurs (309a, 309b) sont configurés pour fournir une isolation optique du micro-dispositif de commande (307) à partir de l'interface de bus DALI (308).

6. Procédé destiné à réduire les fluctuations de tension de sortie d'un pilote pour DEL (300), comprenant :
- l'alimentation en énergie, par un bloc d'alimentation de bus (310), à une interface de bus DALI (308) pouvant être connectée à un bus DALI pour mettre sous tension le bus DALI en exploitant une tension d'alimentation pour l'interface de bus DALI (308) d'une tension de sortie d'une circuiterie PFC à commutation active (302),
- la commande, par une circuiterie de commande (306) pour une commande de rétroaction de la tension de sortie du PFC à commutation active (302), d'un commutateur du PFC à commutation active (302),
- la commande, par un micro-dispositif de commande (307), de l'interface de bus DALI (308) et
- la communication, par le micro-dispositif de commande (307), avec la circuiterie de commande (306),
**caractérisé en ce que** le procédé comprend en outre
- l'augmentation sélective, par le micro-dispositif de commande (307), d'une vitesse de commande du PFC à commutation active (302) dans des périodes de temps dans lesquelles le micro-dispositif de commande (307) envoie des signaux DALI en sortie sur l'interface de bus DALI (308) ou détecte des signaux DALI entrants à partir de l'interface de bus DALI (308).

7. Produit-programme informatique stockant au moins une partie de code logiciel, l'au moins une partie de code logiciel comprenant des instructions pour amener le pilote pour DEL (300) selon la revendication 1 à exécuter les étapes du procédé selon la revendication 6.
